# EUROPÄISCHE PATENTSCHRIFT

(11) **EP 2 186 585 B1**
(45) Veröffentlichungstag und Bekanntmachung des Hinweises auf die Patenterteilung: **28.12.2011**
(21) Anmeldenummer: 09174360.9
(22) Anmeldetag: 28.10.2009
(51) Int. Cl.: B23B 39/16

(54) **Werkzeugeinheit**
Tool unit
Unité d'outil

(30) Priorität: 12.11.2008 DE 102008058201
(43) Veröffentlichungstag der Anmeldung: 19.05.2010
(73) Patentinhaber: Traub Drehmaschinen GmbH & Co. KG, 73262 Reichenbach (DE)
(72) Erfinder: Baumann, Ulrich, 73252 Lenningen (DE)
(74) Vertreter: Hoeger, Stellrecht & Partner Patentanwälte

(56) Entgegenhaltungen:
- GB-A- 223 431
- GB-A- 857 771
- US-A- 1 489 495
- US-A- 2 509 696

## Beschreibung

Die Erfindung betrifft eine Werkzeugeinheit umfassend einen Werkzeugträger, mehrere, an dem Werkzeugträger angeordnete Werkzeughalteraufnahmen, in die Werkzeughalteraufnahmen mit einem Gehäuseabschnitt einsetzbare Werkzeughalter, von den Werkzeughaltern gehaltene Werkzeuge und einen an dem Werkzeugträger vorgesehenen Werkzeugantrieb.

Derartige Werkzeugeinheiten sind aus dem Stand der Technik bekannt, wobei bei diesen das Problem besteht, die Werkzeuge in den einzelnen Werkzeughaltern einerseits flexibel und andererseits effizient anzutreiben.

Aus der US 1,489,495 ist ein Werkzeugträger in Form eines Mehrfachbohrkopfes bekannt, bei welchem an einem Grundkörper oder Sockel mehrere Werkzeughalter dadurch montierbar sind, dass diese durch in eine T-Nut des Sockels mit ihrem Kopf eingreifende Schrauben fixiert werden. Alle diese Werkzeughalter tragen Ritzel die durch auf einer zentralen Welle angeordnete Zahnräder antreibbar sind, wobei über die Ritzel ein Antreiben der von den Werkzeughaltern gehaltenen Bohrer erfolgt.

Der Erfindung liegt daher die Aufgabe zugrunde, eine Werkzeugeinheit der gattungsgemäßen Art derart zu verbessern, dass ein Antrieb von von den Werkzeughaltern gehaltenen Werkzeugen möglichst effizient und flexibel möglich ist.

Diese Aufgabe wird bei einer Werkzeugeinheit der eingangs beschriebenen Art erfindungsgemäß dadurch gelöst, dass mit dem Werkzeugantrieb ein Antriebskörper antreibbar ist, welcher einer ausgewählten Werkzeughalteraufnahme zugeordnet ist, dass der Antriebskörper ein erstes Antriebselement aufweist, welches koaxial zu einem zweiten Antriebselement eines der in diese ausgewählte Werkzeughalteraufnahme eingesetzten Werkzeughalters angeordnet ist und mit dem zweiten Antriebselement formschlüssig verbindbar ist, und dass der Antriebskörper eine Außenverzahnung trägt, die mit einem Ritzel eines Werkzeughalters in Eingriff bringbar ist, der in eine neben der ausgewählten Werkzeughalteraufnahme liegenden Werkzeughalteraufnahme einsetzbar ist.

Der Vorteil der erfindungsgemäßen Lösung ist somit darin zu sehen, dass mit ein und demselben Antriebskörper die Möglichkeit besteht, einmal das zweite Antriebselement des Werkzeughalters in der ausgewählten Werkzeughalteraufnahme direkt anzutreiben und andererseits auch noch die Möglichkeit besteht, über die Außenverzahnung des Antriebskörpers auch ein Werkzeug eines Werkzeughalters in einer neben der ausgewählten Werkzeughalteraufnahme liegenden Werkzeughalteraufnahme anzutreiben.

Ferner ist ein weiterer Vorteil der erfindungsgemäßen Lösung darin zu sehen, dass in einfacher Weise unterschiedliche Drehzahlen realisierbar sind, nämlich einmal ein übersetzungsfreier Antrieb des Werkzeugs in dem Werkzeughalter, welcher in die ausgewählte Werkzeugaufnahme einsetzbar ist, und andererseits besteht die Möglichkeit, ein Werkzeug in einem Werkzeughalter, der in eine neben der ausgewählten Werkzeughalteraufnahme eingesetzte Werkzeughalteraufnahme eingesetzt ist, mit gegenüber dem Werkzeug in der ausgewählten Werkzeughalteraufnahme unterschiedlicher Drehzahl anzutreiben.

Hinsichtlich der Anordnung der Werkzeughalteraufnahmen wurden bislang keine näheren Angaben gemacht.

So sieht eine vorteilhafte Lösung vor, dass die Werkzeughalteraufnahmen in einem Trägerkörper angeordnet sind und dass der Antriebskörper auf einer einer Frontseite gegenüberliegenden Seite des Trägerkörpers angeordnet ist.

Vorzugsweise sind dabei die Werkzeughalteraufnahmen längs einer Linie angeordnet, insbesondere längs dieser Linie in identischen Abständen voneinander.

Prinzipiell bestünde die Möglichkeit, die Werkzeughalteraufnahmen so anzuordnen, dass Mittelachsen derselben einen Winkel miteinander einschließen. Eine besonders günstige Lösung sieht jedoch vor, dass die Werkzeughalteraufnahmen so angeordnet sind, dass Mittelachsen derselben parallel zueinander verlaufen.

Ferner könnte auch die Frontseite des Trägerkörpers beispielsweise gewölbt oder gestuft verlaufen.

Eine besonders vorteilhafte Lösung sieht jedoch vor, dass die Frontseite des Trägerkörpers eine ebene Fläche darstellt.

Hinsichtlich der Ausbildung des ersten Antriebselements und des zweiten Antriebselements wurden bislang keine näheren Angaben gemacht.

Beispielsweise könnten das erste Antriebselement und das zweite Antriebselement durch eine Nut und eine in die Nut eingreifende Feder gebildet sein.

Eine besonders zweckmäßige Lösung sieht jedoch vor, dass das erste Antriebselement als Innenverzahnung ausgebildet ist, welche mit einem Antriebsritzel als zweitem Antriebselement kämmt.

In diesem Fall ist somit auch das zweite Antriebselement ein Antriebsritzel, in gleicher Weise wie das Antriebsritzel des Werkzeughalters, der in eine Werkzeugaufnahme neben der ausgewählten Werkzeugaufnahme einsetzbar ist.

Besonders günstige Verhältnisse ergeben sich auch dann, wenn das erste Antriebselement und die Außenverzahnung in einer senkrecht zu einer Drehachse des Antriebskörpers verlaufenden Ebene liegen, so dass sowohl die Außenverzahnung als auch das erste Antriebselement im Wesentlichen im selben Abstand von der Frontseite für eine formschlüssige Antriebsverbindung zugänglich sind.

Prinzipiell wäre es denkbar, dass der Antriebskörper über zusätzliche Wellen oder Übertragungsgetriebe vom Werkzeugantrieb antreibbar ist.

Besonders günstig ist es jedoch, wenn der Antriebskörper unmittelbar durch den Werkzeugantrieb antreibbar ist und beispielsweise auch zumindest auf einer Seite durch den Werkzeugantrieb relativ zum Trägerkörper gelagert ist.

Der Werkzeugantrieb kann in unterschiedlichster Art und Weise ausgebildet sein.

Beispielsweise kann der Werkzeugantrieb mit einem beliebigen Motor, insbesondere einem Elektromotor, versehen sein.

Eine bevorzugte Ausführung sieht vor, dass der Werkzeugantrieb einen Servomotor umfasst, wobei ein derartiger Servomotor insbesondere für die Bereitstellung hoher Drehmomente geeignet ist.

Noch vorteilhafter ist es, wenn der Werkzeugantrieb einen Servomotor in Synchrontechnik umfasst.

Hinsichtlich der Ausbildung der Werkzeughalter selbst wurden bislang keine näheren Angaben gemacht.

So sieht eine vorteilhafte Lösung vor, dass jeder Werkzeughalter mindestens eine Werkzeughalterspindel aufweist, so dass mit dieser Werkzeughalterspindel in einfacher Weise angetriebene Werkzeuge verwendet werden können, die in die Werkzeugspindel einsetzbar sind.

Grundsätzlich können in bekannter Weise Einzelwerkzeughalter in die Werkzeughalteraufnahmen eingesetzt werden.

Um eine möglichst große Zahl angetriebener Werkzeuge zur Verfügung zu haben, ist vorzugsweise vorgesehen, dass in die Werkzeughalteraufnahmen Mehrfachwerkzeughalter einsetzbar sind, welche mehrere angetriebene Werkzeuge aufweisen.

Ein derartiger Mehrfachwerkzeughalter kann beispielsweise so ausgebildet sein, dass er einen Gehäuseabschnitt zur Fixierung in einer Werkzeughalteraufnahme umfasst.

Eine besonders günstige Lösung sieht jedoch vor, dass der Mehrfachwerkzeughalter mindestens zwei Gehäuseabschnitte aufweist, von denen jeder in eine von zwei nebeneinanderliegenden Werkzeughalteraufnahmen einsetzbar ist.

Diese Lösung hat einerseits den Vorteil, dass ein derartiger Werkzeughalter sehr stabil in den beiden Werkzeughalteraufnahmen gehalten ist und andererseits den Vorteil, dass ein derartiger Werkzeughalter räumlich günstig ausführbar ist, da jeweils auch die in die beiden in die Werkzeughalteraufnahmen einsetzbaren Gehäuseabschnitte zur Lagerung von Werkzeughalterspindeln ausgenutzt werden können.

Bei einem derartigen Mehrfachwerkzeughalter könnte ein Werkzeug ein nicht angetriebenes Werkzeug sein.

Eine besonders günstige Lösung sieht jedoch vor, dass der Mehrfachwerkzeughalter mindestens zwei drehzahlgekoppelte Werkzeughalterspindeln umfasst.

Derartige drehzahlgekoppelte Werkzeughalterspindeln könnten beispielsweise mit einem definierten Übersetzungsverhältnis drehzahlgekoppelt sein.

Besonders zweckmäßig ist es jedoch, wenn die Werkzeughalterspindeln derart drehzahlgekoppelt sind, dass diese mit derselben Drehzahl antreibbar sind.

Hinsichtlich des Antriebs der einzelnen Werkzeughalter sind die unterschiedlichsten Lösungen denkbar. Beispielsweise wäre es denkbar, bei unterschiedlichen Werkzeughaltern unterschiedliche Antriebsritzel zu verwenden.

Besonders günstig ist es jedoch, wenn alle durch den Werkzeugantrieb antreibbaren Werkzeughalter ein identisches Antriebsritzel tragen. Diese Lösung hat den großen Vorteil, dass damit die Werkzeughalter beliebig ausgewechselt werden können und stets ein Antrieb der Werkzeughalterspindel über das Antriebsritzel möglich ist.

Insbesondere ist dabei vorgesehen, dass das Antriebsritzel sowohl mit der Innenverzahnung als auch mit der Außenverzahnung des Antriebskörpers in Dreheingriff bringbar ist, so dass damit die Möglichkeit besteht, mit der Außenverzahnung des Antriebskörpers die auf mehreren Seiten der ausgewählten Werkzeughalteraufnahme liegenden Werkzeughalter anzutreiben. Insbesondere ist vorgesehen, dass mit dem Antriebskörper sowohl das Antriebsritzel eines in die ausgewählte Werkzeughalteraufnahme eingesetzten Werkzeughalters als auch das Antriebsritzel eines in die neben der ausgewählten Werkzeughalteraufnahme liegende Werkzeugaufnahme eingesetzten Werkzeughalters antreibbar ist.

Somit besteht die Möglichkeit, mit ein und demselben Antriebskörper zwei oder drei oder noch mehr Antriebsritzel anzutreiben, so dass in einfacher Weise mehrere angetriebene Werkzeuge zur Verfügung stehen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein Ausführungsbeispiel einer erfindungs- gemäßen Werkzeugeinheit;
- Fig. 2: einen Schnitt längs Linie 2-2 in Fig. 1;
- Fig. 3: eine Seitenansicht eines Einfachwerkzeughalters;
- Fig. 4: einen Längsschnitt durch den Einfachwerkzeughalter längs Linie 4-4 in Fig. 3;

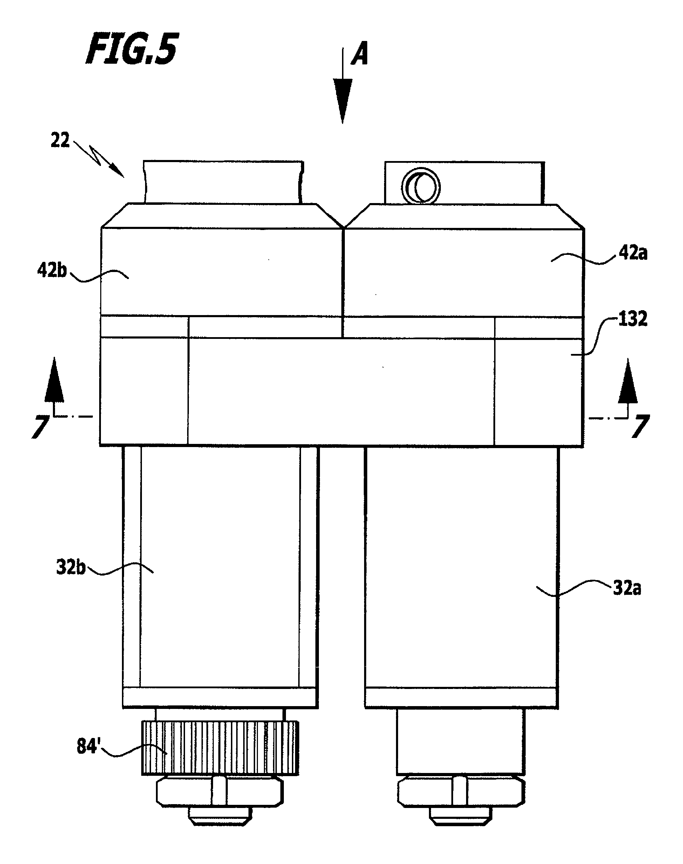

- Fig. 5: eine Seitenansicht ähnlich Fig. 3 eines Mehrfachwerkzeug- halters;
- Fig. 6: einen Längsschnitt ähnlich Fig. 4 durch den Mehrfachwerk- zeughalter;
- Fig. 7: einen Schnitt längs Linie 7-7 in Fig. 5 und
- Fig. 8: eine Draufsicht in Richtung des Pfeils A in Fig. 5.

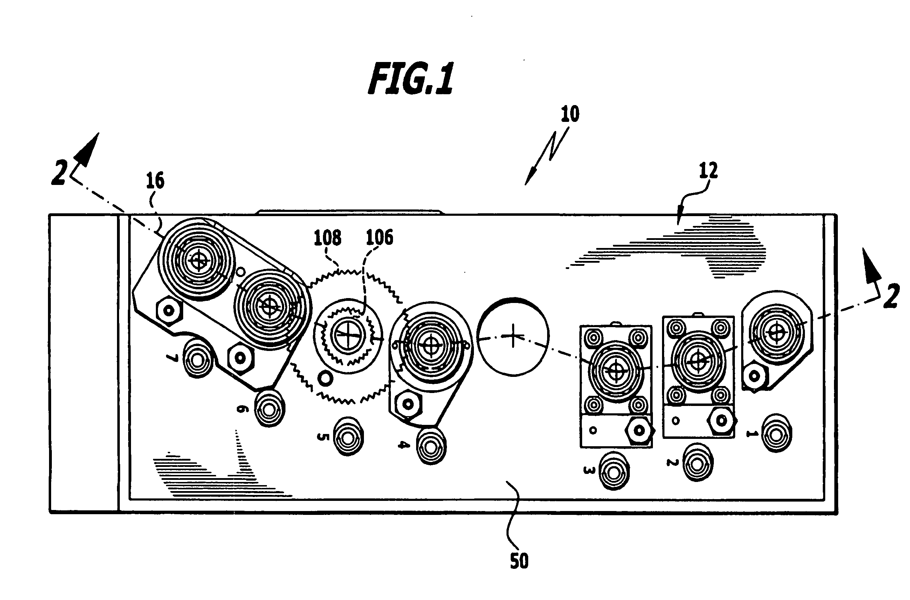

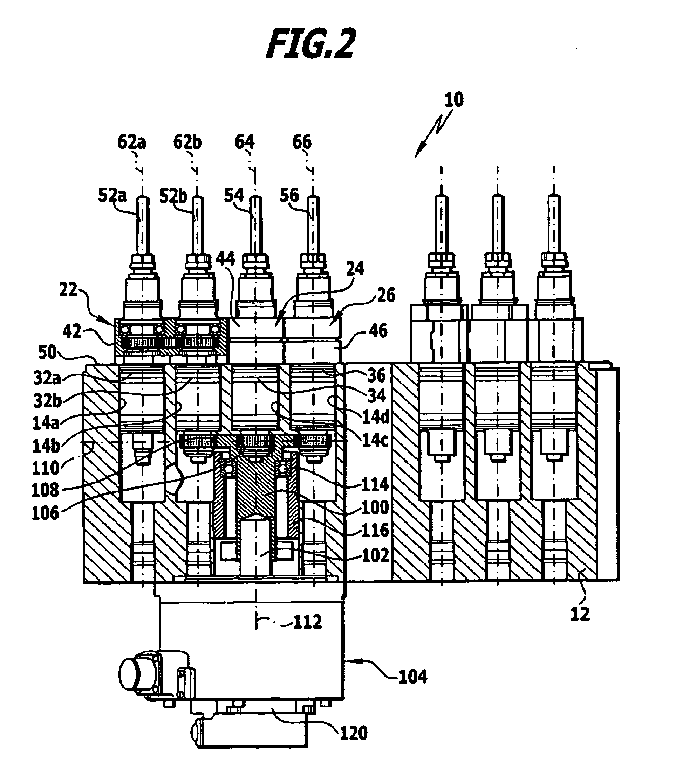

Ein Ausführungsbeispiel einer als Ganzes mit 10 bezeichneten Werkzeugeinheit, dargestellt in Fig. 1 und 2 umfasst einen Werkzeugträger 12, der mit einer Reihe von Werkzeughalteraufnahmen 14a, 14b, 14c und 14d versehen ist, die längs einer Linie 16 mit identischen Abständen voneinander angeordnet sind, wobei die Linie 16 keine Gerade sein muss, sondern als gekrümmte Linie ausgebildet sein kann.

In diese Werkzeughalteraufnahmen 14a bis 14d sind Werkzeughalter 22, 24, 26 mit ihren Gehäuseabschnitten 32a, 32b, 34 und 36 einsetzbar, wobei die Gehäuseabschnitte 32, 34 und 36 vorzugsweise als Schaftkörper ausgebildet sind, während weitere Gehäuseabschnitte 42, 44, 46 auf einer Frontseite 50 des Werkzeugträgers 12 aufsitzen und sich über diese erheben.

In den Werkzeughaltern 22, 24, 26 sind angetriebene Werkzeuge 52a, 52b, 54 und 56 angeordnet, die ihrerseits jeweils um Rotationsachsen 62a, 62b, 64 und 66 rotierend antreibbar in den Gehäuseabschnitten 32, 42, 34, 44 und 36, 46 gelagert sind.

Der Werkzeughalter 22 ist dabei ein sogenannter Doppelwerkzeughalter, während die Werkzeughalter 24 und 26 sogenannte Einzelwerkzeughalter sind.

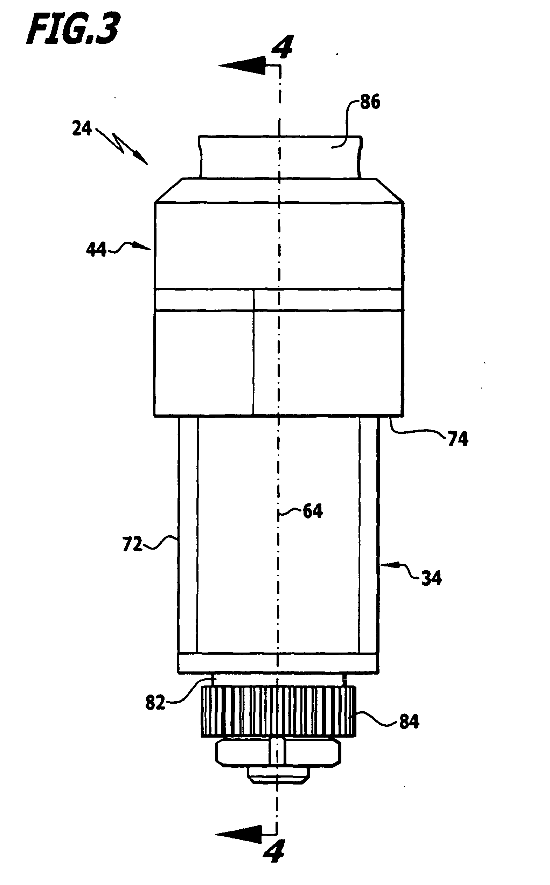

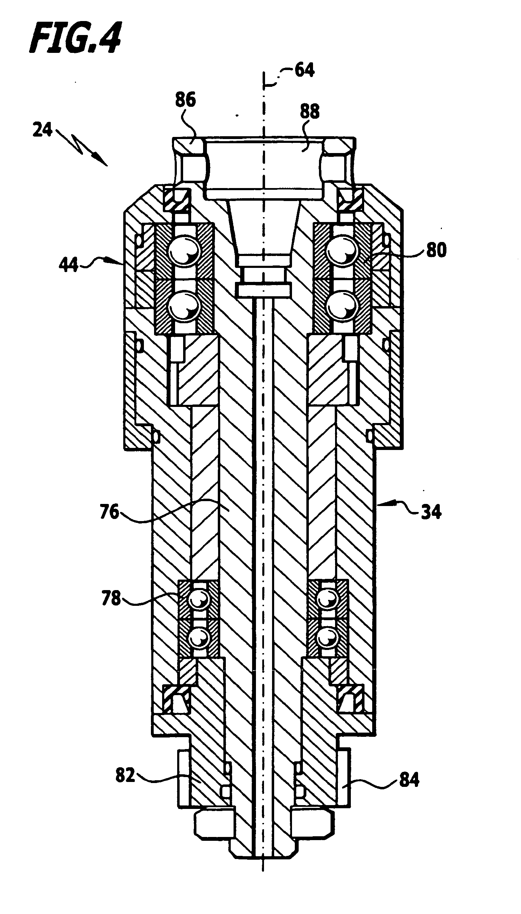

Wie in Fig. 3 und 4 am Beispiel des Einzelwerkzeughalters 24 dargestellt, ist der in eine die Werkzeughalteraufnahmen 14 einsetzbare Gehäuseabschnitt 34 als zur jeweiligen Rotationsachse 64 rotationssymmetrischer Schaft mit einer zur Rotationsachse 64 rotationssymmetrischen Mantelfläche 72 ausgebildet und als solcher durch zeichnerisch nicht dargestellte Spannelemente in der entsprechenden Werkzeughalteraufnahme 14 fixierbar.

Der sich an diesen Gehäuseabschnitt 34 anschließende Gehäuseabschnitt 44 bildet im Anschluss an die zylindrische Mantelfläche 72 eine Flanschfläche 74, welche auf der Frontseite 50 aufsetzbar ist, um eine definierte Ausrichtung des Werkzeughalters 24 relativ zur Frontseite 50 zu erreichen.

In den Gehäuseabschnitten 34 und 44, die fest miteinander verbunden sind, ist eine als Ganzes mit 76 bezeichnete Werkzeughalterspindel angeordnet, die zum einen mit einem Drehlager 78 in dem Gehäuseabschnitt 34 und zum anderen mit einem Drehlager 80 in dem Gehäuseabschnitt 44 drehbar gelagert ist.

Die Werkzeughalterspindel 76 trägt an ihrem dem Gehäuseabschnitt 44 abgewandten und über den Gehäuseabschnitt 34 überstehenden Ende 82 ein Antriebsritzel 84, über welches die Werkzeughalterspindel 76 um die Rotationsachse 64 rotierend antreibbar ist.

Ferner trägt die Werkzeughalterspindel 76 an ihrem dem Ende 82 gegenüberliegenden werkzeugseitigen Ende 86 eine Werkzeugaufnahme 88, in welche das jeweilige angetriebene Werkzeug 54 einsetzbar ist.

Zum Antrieb des Werkzeughalters 24 ist, wie in Fig. 2 dargestellt, ein als Ganzes mit 100 bezeichneter Antriebskörper vorgesehen, welcher auf einer Antriebswelle 102 eines Werkzeugantriebs 104 angeordnet und durch diese rotierend antreibbar ist.

Der Antriebskörper 100 weist dabei, wie in Fig. 1 und 2 dargestellt, als erstes Antriebselement eine Innenverzahnung 106 sowie eine Außenverzahnung 108 auf, wobei die Innenverzahnung 106 und die Außenverzahnung 108 in einer Ebene 110, insbesondere symmetrisch zu dieser, angeordnet sind, die senkrecht zu einer Drehachse 112 des Antriebskörpers 100 verläuft.

Ferner ist der Antriebskörper 100 noch durch ein nahe der Ebene 110 liegendes Stützlager 114 drehbar in einer Lagerhülse 116 des Werkzeugträgers 12 gelagert.

Der ebenfalls fest am Werkzeugträger 12 montierte Werkzeugantrieb 104 umfasst vorzugsweise einen in Synchrontechnik ausgebildeten Servomotor 120, welcher in der Lage ist, ein hohes Drehmoment zu liefern.

Der Antriebskörper 100 ist mit seiner Drehachse 112 der Werkzeughalteraufnahme 14c zugeordnet und somit mit seiner Drehachse 112 koaxial zu der Rotationsachse 64 des in die Werkzeughalteraufnahme 14c eingesetzten Werkzeughalters 24 ausgerichtet.

Ferner ist die Innenverzahnung 106 des Antriebskörpers 100 so angeordnet, dass der in die Werkzeughalteraufnahme 14c eingesetzte Werkzeughalter 24 mit seinem Antriebsritzel 84 in die Innenverzahnung 106 eingreift und durch Formschluss drehfest mit dem Antriebskörper 100 gekoppelt ist.

Der Antrieb der Werkzeughalterspindel 76 des Werkzeughalters 24 erfolgt somit über den Antriebskörper 100 und zwar mit derselben Drehzahl wie der Antriebskörper 100 der durch den Werkzeugantrieb 104 angetrieben ist.

Bei Vorsehen eines entsprechenden Werkzeugantriebs 104 besteht somit die Möglichkeit, die Werkzeughalterspindel 76 des Werkzeughalters 24 querkräftefrei mit entsprechend großem Drehmoment, nämlich genau dem an dem Antriebskörper 100 zur Verfügung stehenden Drehmoment, anzutreiben, allerdings aber auch mit genau derselben Drehzahl, mit welcher auch der Antriebskörper 100 dreht.

Ferner ist der Werkzeughalter 26 identisch ausgebildet wie der Werkzeughalter 24, so dass hinsichtlich der Beschreibung der Teile desselben vollinhaltlich auf die Ausführungen zum Werkzeughalter 24 Bezug genommen werden kann.

Auch das Antriebsritzel 84 des Werkzeughalters 26 in der neben der Werkzeughalteraufnahme 14c angeordneten Werkzeughalteraufnahme 14d ist durch den Antriebskörper 100 antreibbar, allerdings nicht mit der Innenverzahnung 106, sondern mit dessen Außenverzahnung 108, die so dimensioniert ist, dass sie mit dem Antriebsritzel 84 des in der Werkzeughalteraufnahme 14d eingesetzten Werkzeughalters 26 kämmt.

Da die Außenverzahnung 108 zwangsläufig einen größeren Durchmesser aufweist als die Außenverzahnung 106 ergibt sich bei identischen Antriebsritzein 84 der Werkzeughalter 24 und 26 zwangsläufig eine Übersetzung zu höheren Drehzahlen beim Antrieb des Antriebsritzels 84 des Werkzeughalters 26, so dass damit auch die Werkzeughalterspindel 76 des Werkzeughalters 26 mit höherer Drehzahl dreht als die Werkzeughalterspindel 76 des Werkzeughalters 24.

Somit lässt sich das Werkzeug 56 des Werkzeughalters 26 mit einer höheren Drehzahl um die Rotationsachse 66 rotierend antreiben als das Werkzeug 54 des Werkzeughalters 24.

Folglich sind mit diesem Werkzeug 56 Bearbeitungen möglich, die einerseits eine höhere Drehzahl erfordern, andererseits jedoch bei gleicher Leistung mit einem geringeren maximalen Drehmoment auskommen als die Bearbeitungen, die mit dem Werkzeug 54 des Werkzeughalters 24 durchführbar sind.

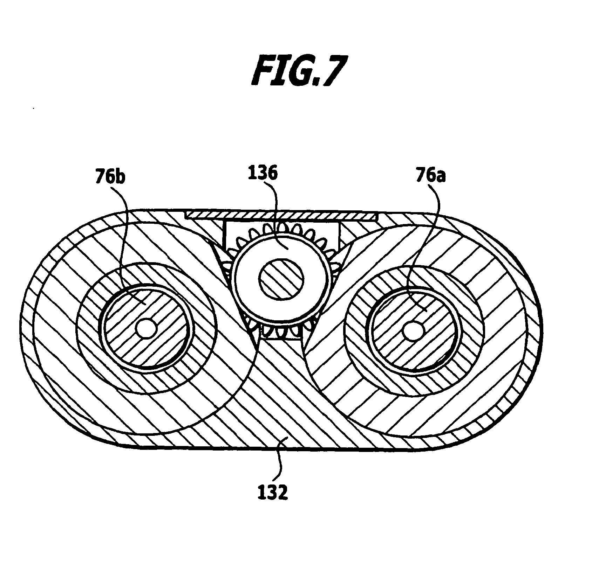

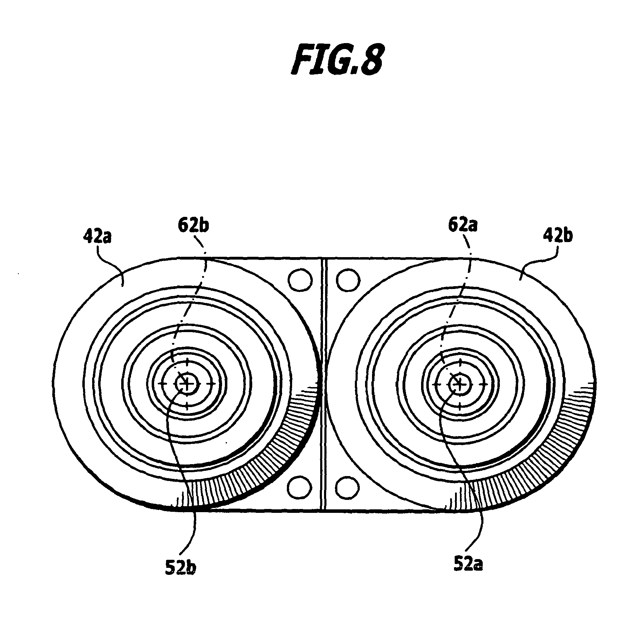

Wie in den Fig. 7 bis 8 dargestellt, ist der Werkzeughalter 22 als sogenannter Doppelwerkzeughalter ausgebildet, das heißt, dass dieser Werkzeughalter 22 zwei in demselben Abstand wie die Werkzeughalteraufnahmen 14 voneinander angeordnete Gehäuseabschnitte 32a und 32b aufweist, von denen jeder in eine der Werkzeughalteraufnahmen 14, einsetzbar ist, wobei beispielsweise der Gehäuseabschnitt 32a in die Werkzeughalteraufnahme 14a und der Gehäuseabschnitt 32b in die Werkzeughalteraufnahme 14b einsetzbar ist.

Ferner ist jeder der Gehäuseabschnitte 32a, 32b mit einem Gehäuseabschnitt 42a bzw. 42b verbunden, wobei die Gehäuseabschnitte 42a und 42b ihrerseits beispielsweise durch eine gemeinsame Gehäusebasis 132 fest miteinander verbunden sind, so dass dadurch auch die Gehäuseabschnitte 32a, 32b fest mit einander verbunden und definiert zueinander, vorzugsweise parallel zueinander, ausgerichtet sind.

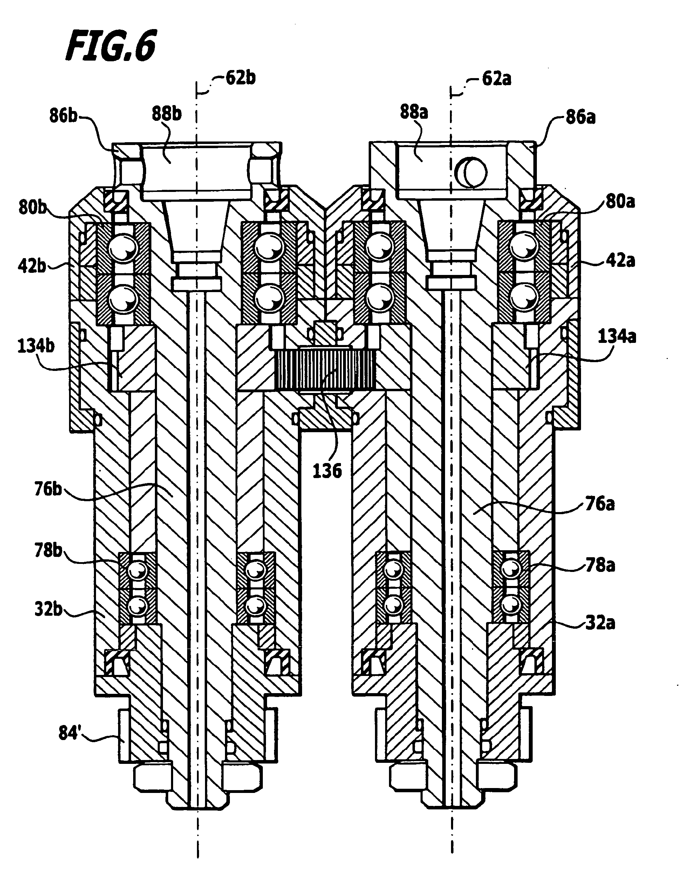

Wie in Fig. 6 dargestellt, ist in den miteinander verbundenen Gehäuseabschnitten 32a und 42a eine Werkzeughalterspindel 76a angeordnet und in den Gehäuseabschnitten 32b und 42b, die ebenfalls fest miteinander verbunden sind, eine Werkzeughalterspindel 76b, wobei die Werkzeughalterspindeln 76a, 76b in gleicher Weise wie beim Einzelwerkzeughalter 24 durch Drehlager 78a und 80a bzw. 78b und 80b in den jeweiligen Gehäuseabschnitten 32 bzw. 42 um die Rotationsachsen 62a bzw. 62b rotierend gelagert und parallel zueinander ausgerichtet sind.

Abweichend von der Werkzeughalterspindel 76 des Einzelwerkzeughalters 24 tragen die Werkzeughalterspindeln 76a und 76b im Bereich der Gehäuseabschnitte 42a bzw. 42b jeweils ein Kopplungsritzel 134a und 134b das jeweils mit einem zwischen den Kopplungsritzeln 134a und 134b angeordneten Übertragungsritzel 136 kämmt, so dass die Werkzeughalterspindein 76a und 76b drehzahlgekoppelt, und zwar im Verhältnis 1:1, in dem Doppelwerkzeughalter 22 angeordnet sind.

Aus diesem Grund ist auch nur eine der Werkzeughalterspindeln 76, beispielsweise die Werkzeughalterspindel 76b, mit einem Antriebsritzel 84' versehen, während die Werkzeughalterspindel 76a kein Antriebsritzel trägt.

Das Antriebsritzel 84' ist dabei identisch ausgebildet wie die Antriebsritzel der Werkzeughalter 24 und 26, so dass bei Anordnung des Doppelwerkzeughalters 22 derart, dass das Antriebsritzel 84' in der Werkzeughalteraufnahme 14b angeordnet ist, das Antriebsritzel 84' mit der Außenverzahnung 108 des Antriebskörpers 100 kämmend in Eingriff ist und dabei mit derselben Untersetzung antreibbar ist, wie das Antriebsritzel 84 des Werkzeughalters 26, so dass die Werkzeughalterspindeln 76a, 76b der Werkzeughalter 24 und 26 mit der gleichen Übersetzung angetrieben sind.

Aufgrund der Kopplung der Werkzeughalterspindein 76b und 76a sind somit auch beide Werkzeughalterspindeln 76a und 76b des Doppelwerkzeughalters 22 mit der gleichen Drehzahl angetrieben.

Mit dem erfindungsgemäßen Doppelwerkzeughalter 22 besteht somit die Möglichkeit, bereits durch Antrieb einer seiner Werkzeughalterspindeln 76a, 76b die andere Werkzeughalterspindel 76b, 76a mit genau derselben Drehzahl anzutreiben.

Bei dem Doppelwerkzeughalter 22 sind vorzugsweise die Gehäuseabschnitte 32a und 32b sowie 42a und 42b identisch ausgebildet und auch die Werkzeughalterspindeln 76a und 76b identisch ausgebildet, so dass eine Vielzahl von Gleichteilen, insbesondere im Fall der Werkzeughalterspindel 76a und b als auch der Drehlager 78 und 80 möglich ist.

Alternativ zu der in Fig. 2 dargestellten Anordnung besteht aber auch die Möglichkeit, den Doppelwerkzeughalter 22 in die Werkzeughalteraufnahme 14c so einzusetzen, dass der Gehäuseabschnitt 32b des Doppelwerkzeughalters 22 in der Werkzeughalteraufnahme 14c sitzt und das Antriebsritzel 84' durch die Innenverzahnung 106 angetrieben ist.

Da die andere Werkzeughalterspindel, in dem Fall die Werkzeughalterspindel 76a, ihrerseits kein Antriebsritzel trägt, erfolgt kein Drehantrieb derselben über die Außenverzahnung 108, sondern nur ein Antrieb aufgrund der in dem Doppelwerkzeughalter 22 vorgesehenen Kopplung der Werkzeughalterspindein 76b und 76a.

In diesem Fall sind dann beide Werkzeughalterspindeln 76b und 76a mit der dem Antriebskörper 100 entsprechenden Drehzahl angetrieben, allerdings mit einem entsprechend größeren Drehmoment.

Alternativ zum Vorsehen des Doppelwerkzeughalters 22 in den Werkzeughalteraufnahmen 14a und 14b ist es aber auch denkbar, in die Werkzeughalteraufnahme 14b einen der Einzelwerkzeughalter 24 oder 26 einzusetzen, so dass dessen Werkzeughalterspindel 76 durch die Außenverzahnung 108 des Antriebskörpers 100 mit der entsprechenden Übersetzung angetrieben ist. In diesem Fall besteht dann allerdings keine Möglichkeit, in der Werkzeughalteraufnahme 14a einen angetriebenen Werkzeughalter vorzusehen, sondern es besteht nur die Möglichkeit, einen nicht angetriebenen Werkzeughalter in diese einzusetzen, der aufgrund der Zuordnung des Antriebskörpers 100 zur Werkzeughalteraufnahme 14c nicht antreibbar ist.

Alternativ dazu ist es aber auch denkbar, mehreren der Werkzeughalteraufnahmen 14 einen Antriebskörpers 100 zuzuordnen, welcher jeweils in der Lage ist, sowohl in der unmittelbar zugeordneten Werkzeughalteraufnahme 14 mit der Innenverzahnung 106 als auch in den unmittelbar benachbarten Werkzeughalteraufnahmen 14 mit der Außenverzahnung 108 die jeweilige Werkzeughalterspindel 76 entweder mit niedriger Drehzahl und hohem Drehmoment oder mit hoher Drehzahl und niedrigem Drehmoment anzutreiben.

## Patentansprüche

1. Werkzeugeinheit (10) umfassend einen Werkzeugträger (12), mehrere an dem Werkzeugträger (12) angeordnete Werkzeughalteraufnahmen (14), in die Werkzeughalteraufnahmen (14) mit einem Gehäuseabschnitt (32, 34, 36) einsetzbare Werkzeughalter (22, 24, 26), von den Werkzeughaltern (22, 24, 26) gehaltene Werkzeuge (52, 54, 56) und einen an dem Werkzeugträger (12) vorgesehenen Werkzeugantrieb (104), mit welchem ein Antriebskörper (100) antreibbar ist, welcher seinerseits einer ausgewählten Werkzeughalteraufnahme (14c) zugeordnet ist, wobei der Antriebskörper (100) ein erstes Antriebselement (106) aufweist, welches koaxial zu einem zweiten Antriebselement (84, 84') eines der in diese ausgewählte Werkzeughalteraufnahme (14c) eingesetzten Werkzeughalters (22, 24) angeordnet ist und mit dem zweiten Antriebselement (84, 84') formschlüssig verbindbar ist, und wobei der Antriebskörper (100) eine Außenverzahnung (108) trägt, die mit einem Antriebsritzel (84, 84') eines Werkzeughalters (22, 26) in Eingriff bringbar ist, der in eine neben der ausgewählten Werkzeughalteraufnahme (14c) liegenden Werkzeughalteraufnahme (14b, 14d) einsetzbar ist.

2. Werkzeugeinheit nach Anspruch 1, **dadurch gekennzeichnet, dass** die Werkzeughalteraufnahmen (14) in einem Trägerkörper (12) angeordnet sind und dass der Antriebskörper (100) auf einer einer Frontseite (50) gegenüberliegenden Seite des Trägerkörpers (12) angeordnet ist.

3. Werkzeugeinheit nach einem der voranstehenden Ansprüche, **dadurch gekennzeichnet, dass** die Werkzeughalteraufnahmen (14) längs einer Linie (16) angeordnet sind.

4. Werkzeugeinheit nach einem der voranstehenden Ansprüche, **dadurch gekennzeichnet, dass** das erste Antriebselement als Innenverzahnung (106) ausgebildet ist, welche mit einem Antriebsritzel (84, 84') als zweitem Antriebselement kämmt.

5. Werkzeugeinheit nach einem der voranstehenden Ansprüche, **dadurch gekennzeichnet, dass** das erste Antriebselement (106) und die Außenverzahnung (108) in einer senkrecht zu einer Drehachse (112) des Antriebskörpers (100) verlaufenden Ebene (110) liegen.

6. Werkzeugeinheit nach einem der voranstehenden Ansprüche, **dadurch gekennzeichnet, dass** der Antriebskörper (100) unmittelbar durch den Werkzeugantrieb (104) antreibbar ist.

7. Werkzeugeinheit nach Anspruch 6, **dadurch gekennzeichnet, dass** der Werkzeugantrieb (104) einen Servomotor (120) umfasst.

8. Werkzeugeinheit nach Anspruch 7, **dadurch gekennzeichnet, dass** der Werkzeugantrieb (104) einen Servomotor (120) in Synchrontechnik umfasst.

9. Werkzeugeinheit nach einem der voranstehenden Ansprüche, **dadurch gekennzeichnet, dass** jeder Werkzeughalter (22, 24, 26) mindestens eine Werkzeughalterspindel (76) aufweist.

10. Werkzeugeinheit nach einem der voranstehenden Ansprüche, **dadurch gekennzeichnet, dass** in die Werkzeughalteraufnahmen (14) Mehrfachwerkzeughalter (22) einsetzbar sind, welche mehrere angetriebene Werkzeuge (52a, b) aufweisen.

11. Werkzeugeinheit nach Anspruch 10, **dadurch gekennzeichnet, dass** die Mehrfachwerkzeughalter (22) mindestens zwei Gehäuseabschnitte (32a, 32b) aufweist, von denen jeder in eine von zwei nebeneinanderliegenden Werkzeughalteraufnahmen (14a, 14b) einsetzbar ist.

12. Werkzeugeinheit nach Anspruch 10 oder 11, **dadurch gekennzeichnet, dass** der Mehrfachwerkzeughalter (22) mindestens zwei drehzahlgekoppelte Werkzeughalterspindeln (76a, 76b) umfasst.

13. Werkzeugeinheit nach einem der voranstehenden Ansprüche, **dadurch gekennzeichnet, dass** alle durch den Werkzeugantrieb (104) antreibbaren Werkzeughalter (22, 24, 26) ein identisches Antriebsritzel (84, 84') tragen.

14. Werkzeugeinheit nach einem der voranstehenden Ansprüche, **dadurch gekennzeichnet, dass** das Antriebsritzel (84, 84') sowohl mit der Innenverzahnung (106) als auch mit der Außenverzahnung (108) des Antriebskörpers (100) in Dreheingriff bringbar ist.

15. Werkzeugeinheit nach Anspruch 13 oder 14, **dadurch gekennzeichnet, dass** mit dem Antriebskörper (100) sowohl das Antriebsritzel (84, 84') eines in die ausgewählte Werkzeughalteraufnahme (14c) eingesetzten Werkzeughalters (22, 24) als auch das Antriebsritzel (84, 84') eines in die neben der ausgewählten Werkzeugaufnahme (14c) liegende Werkzeugaufnahme (14b, 14d) eingesetzten Werkzeughalters (22, 26) antreibbar ist.

## Claims

1. Tool unit (10) comprising a tool carrier (12), several tool holder receptacles (14) arranged on the tool carrier (12), tool holders (22, 24, 26) insertable into the tool holder receptacles (14) with a housing section (32, 34, 36), tools (52, 54, 56) held by the tool holders (22, 24, 26) and a tool drive (104) provided on the tool carrier (12), a drive member (100) being drivable with said tool drive, said drive member being associated for its part with a selected tool holder receptacle (14c), wherein the drive member (100) has a first drive element (106) arranged coaxially to a second drive element (84, 84') of a tool holder (22, 24) inserted into this selected tool holder receptacle (14c), said first drive element being connectable to the second drive element (84, 84') in a form locking manner, and wherein the drive member (100) has external teeth (108) adapted to be brought into engagement with a driving pinion (84, 84') of a tool holder (22, 26) insertable into a tool holder receptacle (14b, 14d) located next to the selected tool holder receptacle (14c).

2. Tool unit as defined in claim 1, **characterized in that** the tool holder receptacles (14) are arranged in a carrier member (12) and that the drive member (100) is arranged on a side of the carrier member (12) located opposite a front side (50).

3. Tool unit as defined in any one of the preceding claims, **characterized in that** the tool holder receptacles (14) are arranged along a line (16).

4. Tool unit as defined in any one of the preceding claims, **characterized in that** the first drive element is designed as internal teeth (106) meshing with a driving pinion (84, 84') as second drive element.

5. Tool unit as defined in any one of the preceding claims, **characterized in that** the first drive element (106) and the external teeth (108) are located in a plane (110) extending at right angles to an axis of rotation (112) of the drive member (100).

6. Tool unit as defined in any one of the preceding claims, **characterized in that** the drive member (100) is adapted to be driven directly by the tool drive (104).

7. Tool unit as defined in claim 6, **characterized in that** the tool drive (104) comprises a servomotor (120).

8. Tool unit as defined in claim 7, **characterized in that** the tool drive (104) comprises a servomotor (120) with synchronous technology.

9. Tool unit as defined in any one of the preceding claims, **characterized in that** each tool holder (22, 24, 26) has at least one tool holder spindle (76).

10. Tool unit as defined in any one of the preceding claims, **characterized in that** multiple tool holders (22) are insertable into the tool holder receptacles (14), said multiple tool holders having multiple driven tools (52a, b).

11. Tool unit as defined in claim 10, **characterized in that** the multiple tool holder (22) has at least two housing sections (32a, 32b), each of said housing sections being insertable into one of two tool holder receptacles (14a, 14b) located next to one another.

12. Tool unit as defined in claim 10 or 11, **characterized in that** the multiple tool holder (22) comprises at least two tool holder spindles (76a, 76b) coupled with respect to rotational speed.

13. Tool unit as defined in any one of the preceding claims, **characterized in that** all the tool holders (22, 24, 26) drivable by the tool drive (104) bear an identical driving pinion (84, 84').

14. Tool unit as defined in any one of the preceding claims, **characterized in that** the driving pinion (84, 84') is adapted to be brought into rotational engagement not only with the internal teeth (106) but also with the external teeth (108) of the drive member (100).

15. Tool unit as defined in claim 13 or 14, **characterized in that** not only the driving pinion (84, 84') of a tool holder (22, 24) inserted into the selected tool holder receptacle (14c) but also the driving pinion (84, 84') of a tool holder (22, 26) inserted into the tool receptacle (14b, 14d) located next to the selected tool receptacle (14c) are drivable with the drive member (100).

## Revendications

1. Unité d'outil (10) comprenant un support d'outil (12), plusieurs logements de porte-outil (14) disposés sur le support d'outil (12), des porte-outils (22, 24, 26) pouvant être mis en place dans les logements de porte-outil (14) par une partie en carter (32, 34, 36), des outils (52, 54, 56) maintenus par les porte-outils (22, 24, 26) et un entraînement d'outil (104) prévu sur le support d'outil (12) et permettant d'entraîner un corps d'entraînement (100), lequel est quant à lui affecté à un logement de porte-outil (14c) sélectionné, où le corps d'entraînement (100) comporte un premier élément d'entraînement (106), lequel est disposé coaxialement à un deuxième élément d'entraînement (84, 84') d'un des porte-outils (22, 24) mis en place dans ledit logement de porte-outil (14c) sélectionné et peut être raccordé au deuxième élément d'entraînement (84, 84') par correspondance de forme, et où le corps d'entraînement (100) supporte une denture extérieure (108) qui peut être engrenée avec un pignon d'entraînement (84, 84') d'un porte-outil (22, 26) pouvant être mis en place dans un logement de porte-outil (14b, 14d) situé à côté du logement de porte-outil (14c) sélectionné.

2. Unité d'outil selon la revendication 1, **caractérisée en ce que** les logements de porte-outil (14) sont disposés dans un corps de support (12) et **en ce que** le corps d'entraînement (100) est disposé sur un côté opposé à un côté avant (50) du corps de support (12).

3. Unité d'outil selon l'une des revendications précédentes, **caractérisée en ce que** les logements de porte-outil (14) sont disposés sur une ligne (16).

4. Unité d'outil selon l'une des revendications précédentes, **caractérisée en ce que** le premier élément d'entraînement est réalisé comme denture intérieure (106) s'engrenant avec un pignon d'entraînement (84, 84') en tant que deuxième élément d'entraînement.

5. Unité d'outil selon l'une des revendications précédentes, **caractérisée en ce que** le premier élément d'entraînement (106) et la denture extérieure (108) sont situés sur un plan (110) qui s'étend perpendiculairement à un axe de rotation (112) du corps d'entraînement (100).

6. Unité d'outil selon l'une des revendications précédentes, **caractérisée en ce que** le corps d'entraînement (100) est directement entraînable par l'entraînement d'outil (104).

7. Unité d'outil selon la revendication 6, **caractérisée en ce que** l'entraînement d'outil (104) comprend un servomoteur (120).

8. Unité d'outil selon la revendication 7, **caractérisée en ce que** l'entraînement d'outil (104) comprend un servomoteur (120) à technique synchrone.

9. Unité d'outil selon l'une des revendications précédentes, **caractérisée en ce que** chaque porte-outil (22, 24, 26) comporte au moins une bronche de porte-outil (76).

10. Unité d'outil selon l'une des revendications précédentes, **caractérisée en ce que** des porte-outils multiples (22) comportant plusieurs outils entraînés (52a, b) peuvent être mis en place dans les logements de porte-outil (14).

11. Unité d'outil selon la revendication 10, **caractérisée en ce que** les porte-outils multiples (22) comportent au moins deux parties en carter (32a, 32b), dont chacune peut être mise en place dans un de deux logements de porte-outil (14a, 14b) contigus.

12. Unité d'outil selon la revendication 10 ou la revendication 11, **caractérisée en ce que** le porte-outil multiple (22) comprend au moins deux broches de porte-outil (76a, 76b) à couplage de vitesses de rotation.

13. Unité d'outil selon l'une des revendications précédentes, **caractérisée en ce que** tous les porte-outils (22, 24, 26) entraînables par l'entraînement d'outil (104) supportent un pignon d'entraînement (84, 84') identique.

14. Unité d'outil selon l'une des revendications précédentes, **caractérisée en ce que** le pignon d'entraînement (84, 84') peut être engrené en rotation avec la denture intérieure (106) ainsi qu'avec la denture extérieure (108) du corps d'entraînement (100).

15. Unité d'outil selon la revendication 13 ou la revendication 14, **caractérisée en ce que** le pignon d'entraînement (84, 84') d'un porte-outil (22, 24) mis en place dans le logement de porte-outil (14c) sélectionné ainsi que le pignon d'entraînement (84, 84') d'un porte-outil (22, 26) mis en place dans le logement de porte-outil (14b, 14d) situé à côté du logement de porte-outil (14c) sélectionné sont entraînables au moyen du corps d'entraînement (100).
